# EUROPÄISCHE PATENTSCHRIFT

(11) **EP 1 970 667 B1**
(45) Veröffentlichungstag und Bekanntmachung des Hinweises auf die Patenterteilung: **12.06.2013**
(21) Anmeldenummer: 07005442.4
(22) Anmeldetag: 16.03.2007
(51) Int. Cl.: G01B 11/00, B21D 28/26

(54) **Maschnielle Anordung für die Blechfertigung mit einer Vorrichtung zur Überprüfung einer Werkstücköffnung als Ergebnis einer Werkstückbearbeitung**
Sheet metal working machine with a device for inspecting a perforation in a workpiece as results of an operation on the workpiece
Machine à travailler d'une tôle avec un dispositif pour contrôler une perforation dans la tôle qui résulte d'un traitement de la tôle

(43) Veröffentlichungstag der Anmeldung: 17.09.2008
(73) Patentinhaber: TRUMPF Werkzeugmaschinen GmbH + Co. KG, 71254 Ditzingen (DE)
(72) Erfinder: Bytow, Peter, 75397 Simmozheim (DE)
(74) Vertreter: Kohler Schmid Möbus

(56) Entgegenhaltungen:
- EP-A1- 0 536 685
- WO-A-99/10136
- JP-A- 2006 030 010
- US-A- 4 857 698
- US-A- 5 721 587

## Beschreibung

Die Erfindung betrifft eine maschinelle Anordnung für die Blechfertigung,
- mit einem C-förmigen Maschinengestell, das einen oberen Gestellschenkel , einen unteren Gestellschenkel sowie einen Rachenraum aufweist,
- mit einer in dem Rachenraum des Maschinengestells untergebrachten und an einen Steuerungsrechner einer numerischen Steuerung der maschinellen Anordnung angeschlossenen Koordinatenführung mit einem Schlitten , der mit Spannpratzen versehen ist, welche einen Rand eines Bleches klemmen, das seinerseits auf einer Blechauflage gelagert ist sowie
- mit einer Bearbeitungseinrichtung in Form eines von einem Stanzstempel und einer Stanzmatrize gebildeten Stanzwerkzeuges, welches an Blechen Werkstücköffnungen erstellt, wobei der Stanzstempel in eine obere Werkzeugaufnahme einer Presseinrichtung eingewechselt ist, die an dem oberen Gestellschenkel des Maschinengestells angebracht ist und die ein bei einer Hubbewegung der oberen Werkzeugaufnahme stationäres Gehäuse aufweist und wobei die Stanzmatrize in einer unteren Werkzeugaufnahme an dem unteren Gestellschenkel des Maschinengestells vorgesehen ist, und
- mit einer Vorrichtung zur Überprüfung der Beschaffenheit des in Form einer Werkstücköffnung vorliegenden Ergebnisses einer Blechbearbeitung.

Gattungsgemäßer Stand der Technik ist bekannt aus US 5,721,587 A. Diese Druckschrift offenbart eine Revolverstanzpresse mit einem oberen Werkzeugrevolver sowie mit einem unteren Werkzeugrevolver. Zur Werkstückbearbeitung im regulären Betrieb sind in einander gegenüberliegende Werkzeugaufnahmen der beiden Werkzeugrevolver miteinander zusammenwirkende Stanzwerkzeuge eingesetzt. Vor Beginn der regulären Werkstückbearbeitung wird zunächst eine probeweise Bearbeitung durchgeführt. In zwei Werkzeugaufnahmen, die ansonsten miteinander zusammenwirkende Stanzwerkzeuge aufnehmen, sind dabei einerseits eine Videokamera und andererseits eine Lichtquelle einer Bilderfassungseinrichtung montiert. Nach der probeweisen Bearbeitung wird das mit einer Ausstanzung versehene Werkstück in den Aufnahmebereich der Bilderfassungseinrichtung bewegt. Anschließend nimmt die Videokamera die mittels der Lichtquelle der Bilderfassungseinrichtung hinterleuchtete Ausstanzung auf. Durch computergestütze Auswertung der von der Ausstanzung gemachten Aufnahme wird schließlich die Beschaffenheit der Ausstanzung überprüft.

Ein Verfahren zur Überprüfung der Qualität der Perforation von Papierbahnen ist offenbart in EP 0 536 685 A1. Dabei wird die Güte der in eine Papierbahn eingebrachten Perforationsspalte mittels einer Messvorrichtung überprüft, die eine Lichtquelle sowie eine davon beabstandete Detektoreinrichtung umfasst. Die zu prüfende Papierbahn wird durch den Zwischenraum zwischen der Lichtquelle und der Detektoreinrichtung bewegt. Licht, das von der Lichtquelle auf die Detektoreinrichtung gerichtet wird, tritt durch die Perforationsspalte der Papierbahn hindurch und gelangt zu der Detektoreinrichtung. Diese erzeugt aufgrund des Lichteinfalls ein Detektorsignal, das einer Auswerteeinheit zugeführt wird. Herrschen bei der Erstellung der Perforationsspalte irreguläre Bedingungen, sind etwa die verwendeten Perforationsmesser verschlissen, so verbleiben in den erstellten Perforationsspalten Papierfasem. Je mehr Papierfasern in einen durchleuchteten Perforationsspalt hinein stehen, umso geringer ist die Intensität des zu der Detektoreinrichtung gelangenden Lichtes und umso kleiner ist ein Signalhub des an der Detektoreinrichtung aufgrund des Lichteinfalls generierten Detektorsignals. Der Signalhub des Detektorsignals lässt demnach eine Aussage darüber zu, ob die Perforierung der Papierbahn bei regulären Verhältnissen erfolgt ist oder nicht.

Aufgabe der vorliegenden Erfindung ist es, eine verglichen mit dem Stand der Technik genauere Überprüfung einer Blechbearbeitung auf Vorliegen regulärer Verhältnisse bei der Blechbearbeitung zu ermöglichen und ein die genauere Überprüfungsmöglichkeit nutzende maschinelle Anordnung bereit zustellen.

Erfindungsgemäß gelöst wird diese Aufgabe durch die Vorrichtung gemäß Patentanspruch 1.

Im Falle der Erfindung wird ein Detektionsstrahl verwendet, der als solcher eine hochgenaue Erfassung des Randes der zu überprüfenden Blechöffnungen gestattet. Auf der Grundlage des hochgenauen Detektionsergebnisses lässt sich ein geometrischer Ist-Zustand der Blechöffnungen gleichfalls hochgenau bestimmen. Im Wege eines Vergleiches des geometrischen Ist-Zustandes mit einem entsprechenden Soll-Zustand der Blechöffnungen wird das Ergebnis der vorausgegangenen Blechbearbeitung überprüft. Nachdem der geometrische Ist-Zustand der Blechöffnungen mit hoher Genauigkeit ermittelt worden ist, kann auch der Vergleich mit dem entsprechenden Soll-Zustand ein hochgenaues Ergebnis liefern. Wird im Rahmen des Vergleiches eine Abweichung des ermittelten geometrischen Ist-Zustandes von dem entsprechenden Soll-Zustand einer Blechöffnung festgestellt, so können im Rahmen des erfindungsgemäßen Fertigungsverfahrens Maßnahmen getroffen werden, um den betreffenden geometrischen Ist-Zustand der Blechöffnung in Übereinstimmung mit dem zugeordneten Soll-Zustand zu bringen. Vorzugsweise wird die entsprechende Korrektur im laufenden Betrieb und dabei unmittelbar nach Erkennen der Abweichung des geometrischen Ist-Zustandes von dem geometrischen Soll-Zustand der Blechöffnung vorgenommen. Auf diese Weise kann eine maximale Prozess- bzw. Funktionssicherheit des erfindungsgemäßen Fertigungsverfahrens gewährleistet werden. Die Fertigung von Ausschuss lässt sich auf ein Minimum reduzieren.

Besondere Ausführungsarten der vorliegenden Erfindung ergeben sich aus den abhängigen Patentansprüchen 2 bis 8.

Wird als Detektionsstrahl ein Lichtstrahl eingesetzt, wie dies gemäß Patentanspruch 2 vorgesehen ist, so kann auf einen Fundus an technisch ausgereiften und hochgenau arbeitenden optischen Systemen und Auswerteeinrichtungen zurückgegriffen werden.

In bevorzugter Ausgestaltung der Erfindung verläuft die Bewegungsbahn der Detektionsbewegung, mit welcher das bearbeitete Blech und der Detektionsstrahl relativ zueinander bewegt werden, quer durch die Blechöffnung. Von dem Rand der Blechöffnung werden die einander entlang der Bewegungsbahn der Detektionsbewegung gegenüberliegenden Schnittpunkte des Randes der Blechöffnung mit der Bewegungsbahn der Detektionsbewegung detektiert (Patentanspruch 3). Die genannten Schnittpunkte des Randes der Blechöffnung mit der Bewegungsbahn der Detektionsbewegung stellen sich als besonders markant dar und können folglich mit großer Genauigkeit erfasst werden. Die erfindungsgemäß ausgewertete Ist-Erstreckung der Blechöffnung zwischen den detektierten Schnittpunkten ist in mehrerlei Hinsicht aussagekräftig. Ist eine zu überprüfende Blechöffnung beispielsweise das Ergebnis einer stanzenden Blechbearbeitung, so kann eine festgestellte Abweichung der Ist-Erstreckung von der entsprechenden Soll-Erstreckung der Blechöffnung auf einen teilweisen Ausbruch des eingesetzten Stanzstempels ebenso hindeuten wie auf eine Fehlausrichtung des eingesetzten Stanzwerkzeuges bezüglich der Achse des Stanzhubes oder auf den Einsatz eines Stanzwerkzeuges mit dem falschen Stempel- und/oder Matrizenquerschnitt bzw. -durchmesser. Wird in eine vorgefertigte Blechöffnung ein Gewinde eingeformt, so besitzt die mit dem Gewinde versehene Blechöffnung bearbeitungsbedingt einen kleineren Durchmesser als die vorgefertigte Blechöffnung. Mittels des erfindungsgemäßen Verfahrens nach Patentanspruch 3 kann festgestellt werden, ob ein Gewindeformvorgang das gewünschte Bearbeitungsergebnis erbracht hat. Dies ist nicht der Fall, wenn die bestimmte Ist-Erstreckung der Blechöffnung beispielsweise größer ist als die zugeordnete Soll-Erstreckung. Stimmt die Ist-Erstreckung der Blechöffnung mit der Ist-Erstreckung der mit einem Gewinde zu versehenen vorgefertigten Blechöffnung überein, so kann dies ein Hinweis auf einen Bruch des Gewindeformwerkzeuges sein.

Patentanspruch 4 betrifft den besonders praxisrelevanten Fall, dass die zu überprüfende Blechöffnung einen kreisförmigen Querschnitt besitzt. Die Ausführungen zu Patentanspruch 3 gelten entsprechend, aber mit der Ausnahme, dass eine Fehlausrichtung von Stanzwerkzeugen bezüglich der Achse des Stanzhubes bei Stanzwerkzeugen mit Kreisquerschnitt nicht in Frage kommt.

Ergänzend oder alternativ zu der zu überprüfenden Ist-Erstreckung der Blechöffnung entlang einer die Blechöffnung querenden Bewegungsbahn der Detektionsbewegung wird in weiterer bevorzugter Ausgestaltung der Erfindung die Randkontur der Blechöffnung detektiert (Patentanspruch 5). Aussagekraft besitzen dabei insbesondere die Form und die Ausrichtung der Randkontur der Blechöffnung. Weist etwa die Ist-Form einer durch stanzende Blechbearbeitung erstellten Blechöffnung von der entsprechenden Soll-Form ab, so kann dies beispielsweise einen teilweisen Ausbruch des Stanzwerkzeuges oder den Einsatz eines Stanzwerkzeuges mit falschem Werkzeugquerschnitt indizieren. Stimmt die ermittelte Ist-Ausrichtung der Randkontur der Blechöffnung nicht mit der zugeordneten Soll-Ausrichtung überein, so kann dies auf eine Fehlausrichtung des Stanzwerkzeuges bezüglich der Achse des Stanzhubes hindeuten.

Wird eine Abweichung des geometrischen Ist-Zustandes der überprüften Blechöffnung von einem entsprechenden geometrischen Soll-Zustand festgestellt, so können erfindungsgemäß unterschiedliche Maßnahmen in die Wege geleitet werden. Denkbar ist beispielsweise die Erzeugung eines Signals, das einen Maschinenbediener zum Eingreifen veranlasst. Möglich ist weiterhin eine automatische Unterbrechung des Fertigungsverfahrens. Im Interesse einer möglichst weitgehenden Automatisierung des Fertigungsverfahrens kann vorgesehen sein, dass die Ursache für die festgestellte Abweichung des geometrischen Ist-Zustandes von dem geometrischen Soll-Zustand der überprüften Blechöffnung automatisch beseitigt wird. Liegen etwa Hinweise auf einen teilweisen Ausbruch des verwendeten Stanzwerkzeuges vor, so kann von der Steuerung der Fertigungsanordnung selbsttätig ein Werkzeugwechsel eingeleitet werden, im Rahmen dessen das möglicherweise defekte Stanzwerkzeug gegen ein funktionsfähiges Stanzwerkzeug ausgetauscht wird. Durch anschließende Überprüfung von Blechöffnungen die mittels des eingewechselten Stanzwerkzeuges bearbeitet worden sind, lässt sich feststellen, ob durch den Werkzeugwechsel der geometrische Ist-Zustand der überprüften Blechöffnung in Übereinstimmung mit dem betreffenden Soll-Zustand gebracht worden ist.

Nachstehend wird die Erfindung anhand beispielhafter schematischer Darstellungen näher erläutert. Es zeigen:
- Figur 1: eine maschinelle Anordnung für die Blechfertigung mit einer Bearbeitungseinrichtung sowie mit einer Vorrichtung zur Überprüfung des Bearbeitungsergebnisses,
- Figur 2: eine Darstellung zur Erläuterung der Funktionsweise der Vorrichtung gemäß Figur 1 zur Überprüfung des Bearbeitungsergebnisses in einem ersten Anwendungsfall,
- Figur 3: eine Darstellung entsprechend Figur 2 zu einem zweiten Anwendungsfall,
- Figur 4: eine Darstellung entsprechend den Figuren 2 und 3 zu einem dritten Anwendungsfall und
- Figuren 5a, 5a, 5c: Darstellungen zur Erläuterung der Funktionsweise der Vorrichtung gemäß Figur 1 zur Überprüfung des Bearbeitungsergebnisses in einem vierten Anwendungsfall.

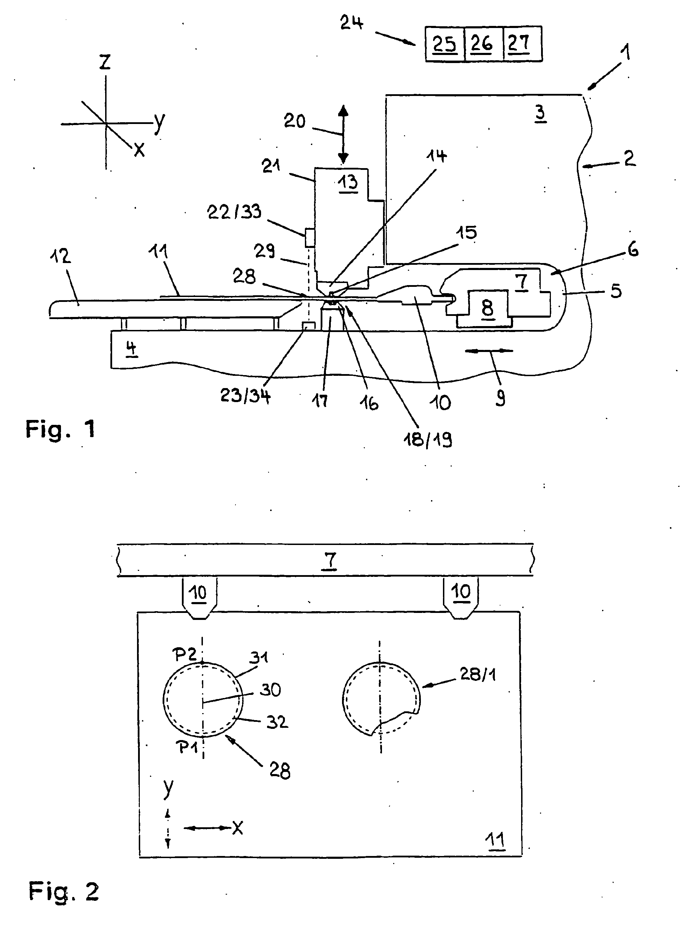

Gemäß Figur 1 umfasst eine maschinelle Anordnung 1 für die Blechfertigung ein C-förmiges Maschinengestell 2, mit einem oberen Gestellschenkel 3 sowie mit einem unteren Gestellschenkel 4. In einem Rachenraum 5 des Maschinengestells 2 ist eine Bewegungseinheit in Form einer herkömmlichen Koordinatenführung 6 untergebracht. Ein Schlitten 7 der Koordinatenführung 6 ist entlang einer Führungsschiene 8 senkrecht zu der Zeichenebene von Figur 1 verfahrbar. Gemeinschaftlich mit der Führungsschiene 8 kann der Schlitten 7 auf dem unteren Gestellschenkel 4 des Maschinengestells 2 in Richtung eines Doppelpfeils 9 bewegt werden.

An seiner Vorderseite ist der Schlitten 7 der Koordinatenführung 6 mit mehreren Spannpratzen 10 versehen, von denen in Figur 1 eine erkennbar ist. Die Spannpratzen 10 klemmen in gewohnter Weise den Rand eines mittels der maschinellen Anordnung 1 zu bearbeitenden Werkstückes in Form eines Bleches 11. Im Übrigen ist das Blech 11 auf einer Blechauflage 12 gelagert, die ihrerseits an dem unteren Gestellschenkel 4 des Maschinengestells 2 angebracht ist. Aufgrund der beschriebenen Beweglichkeit des Schlittens 7 der Koordinatenführung 6 lässt sich das Blech 11 in einer horizontalen Ebene bewegen.

Genutzt wird die Beweglichkeit des Bleches 11 insbesondere zur Blechbearbeitung. Für die Blechbearbeitung vorgesehen ist in dem gezeigten Beispielsfall eine Presseinrichtung 13, die an dem freien Ende des oberen Gestellschenkels 3 des Maschinengestells 2 angebracht ist. Die Presseinrichtung 13 besitzt eine obere Werkzeugaufnahme 14, in die gemäß Figur 1 ein dort lediglich angedeuteter Stanzstempel 15 eingewechselt ist. Dem Stanzstempel 15 zugeordnet ist eine gleichfalls nur angedeutete Stanzmatrize 16 in einer an dem unteren Gestellschenkel 4 des Maschinengestells 2 vorgesehenen unteren Werkzeugaufnahme 17. Gemeinsam mit dem Stanzstempel 15 bildet die Stanzmatrize 16 eine Bearbeitungseinrichtung in Form eines Stanzwerkzeuges 18. Anstelle des Stanzwerkzeuges 18 kann als Bearbeitungseinrichtung ein Gewindeformwerkzeug 19 mit seinen Werkzeugteilen in die obere Werkzeugaufnahme 14 sowie in die untere Werkzeugaufnahme 17 eingebaut sein.

Mittels eines nicht im Einzelnen gezeigten Pressenantriebes der Presseinrichtung 13 lässt sich die obere Werkzeugaufnahme 14 mit dem daran montierten Werkzeugteil in einer durch einen Doppelpfeil veranschaulichten Hubrichtung 20 anheben und absenken. Ein Gehäuse 21 der Presseinrichtung 13 bleibt bei der Hubbewegung der oberen Werkzeugaufnahme 14 stationär.

An der von der Koordinatenführung 6 abliegenden Seite ist das Gehäuse 21 der Presseinrichtung 13 mit einer Sende- und Empfangseinheit 22 versehen. Der Sende- und Empfangseinheit 22 gegenüber liegt ein an dem unteren Gestellschenkel 4 des Maschinengestells 2 angebrachter Reflektor 23, der gemeinsam mit der Sende- und Empfangseinheit 22 eine Detektionseinrichtung bildet. Ebenso wie die Koordinatenführung 6 und die Presseinrichtung 13 ist auch die Sende - und Empfangseinheit 22 an einen Steuerungsrechner 24 einer numerischen Steuerung für die maschinelle Anordnung 1 angeschlossen. Dabei steht die Sende- und Empfangseinheit 22 mit einer Auswerteeinrichtung 25 des Steuerungsrechners 24 in Verbindung. Die Auswerteeinrichtung 25 wiederum ist mit einer Bewegungssteuerung 26 sowie mit einer Pressensteuerung 27 verbunden. Über die Bewegungssteuerung 26 werden die Antriebsmotoren der Koordinatenführung 6, über die Pressensteuerung 27 wird der Pressenantrieb der Presseinrichtung 13 angesteuert. Insofern handelt es sich bei der Pressensteuerung 27 um eine Steuerungseinrichtung für das Stanzwerkzeug 18 bzw. das Gewindeformwerkzeug 19.

Zur stanzenden Bearbeitung des Bleches 11 wird das für die betreffende Bearbeitungsaufgabe vorgesehene Stanzwerkzeug 18 in die obere Werkzeugaufnahme 14 sowie in die untere Werkzeugaufnahme 17 eingewechselt. Anschließend wird das von den Spannpratzen 10 gehaltene Blech 11 mittels der Koordinatenführung 6 gegenüber dem Stanzwerkzeug 18 zugestellt. Sind in das Blech 11 Ausstanzungen einzubringen, die mehrere Arbeitshübe des Stanzwerkzeuges 18 erfordem, so wird das Blech 11 mittels der Koordinatenführung 6 nach jedem einzelnen Arbeitshub des Stanzwerkzeuges 18 nachgesetzt.

Nach Abschluss der stanzenden Bearbeitung bewegt die Koordinatenführung 6 das bearbeitete Blech 11 mit der erstellten Ausstanzung aus dem unmittelbaren Nahbereich des Stanzwerkzeuges 18 in einen Bereich, in welchem die Ausstanzung für die Sende- und Empfangseinheit 22 zugänglich ist. Es folgt dann die Überprüfung der Beschaffenheit des in Form der erstellten Ausstanzung vorliegenden Ergebnisses der Blechbearbeitung.

In Figur 1 ist das Blech 11 mit einer zuvor erstellten Blechöffnung bzw. Ausstanzung 28 unterhalb der Sende- und Empfangseinheit 22 positioniert. Der Sender der Sende- und Empfangseinheit 22 richtet einen Detektionsstrahl in Form eines Laserstrahls 29 zu dem Blech 11 hin. In einem für die numerische Steuerung der maschinellen Anordnung 1 genutzten x-y-z Koordinatensystem ist die Lage der Achse des Laserstrahls 29 ebenso definiert wie die momentane Position des Bleches 11 und somit auch die momentane Position der Ausstanzung 28. Anstelle des Laserstrahls 29 sind auch andersartige Detektionsstrahlen, insbesondere ein Rotlichtstrahl, denkbar.

Zur Überprüfung des Ergebnisses der vorausgegangenen Blechbearbeitung wird das Blech 11 mittels der Koordinatenführung 6 mit einer Detektionsbewegung relativ zu dem Laserstrahl 29 in dessen Querrichtung bewegt. Eine Bewegungsbahn 30, die von dem Laserstrahl 29 bei der Detektionsbewegung an dem Blech 11 quer durch die Ausstanzung 28 beschrieben wird, ist in Figur 2 strichpunktiert angedeutet.

Zu Beginn der Detektionsbewegung trifft der Laserstrahl 29 auf das geschlossene Blech 11 auf. Im Laufe der Detektionsbewegung erreicht der Laserstrahl 29 den Rand 31 der Ausstanzung 28 in einem ersten Schnittpunkt P1 des Randes 31 mit der Bewegungsbahn 30. Für die numerische Steuerung der maschinellen Anordnung 1 bzw. für die mit der Sende- und Empfangseinheit 22 verbundene Auswerteeinrichtung 25 des Steuerungsrechners 24 wird der erste Schnittpunkt P1 dadurch markiert, dass der Laserstrahl 29 quasi mit Erreichen des ersten Schnittpunktes P1 durch die Ausstanzung 28 hindurch auf den unterhalb des Bleches 11 angeordneten Reflektor 23 trifft und von dort zu dem Empfänger der Sende- und Empfangseinheit 22 zurückgeworfen wird. Zu demjenigen Zeitpunkt, zu welchem der Laserstrahl 29 erstmalig von dem Reflektor 23 zurückgeworfen wird und an dem Empfänger der Sende- und Empfangseinheit 22 einfällt, wird die Position des Bleches 11 in dem x-y-z Koordinatensystem der maschinellen Anordnung 1 bestimmt.

Bei fortgesetzter Detektionsbewegung durchquert der Laserstrahl 29 die Ausstanzung 28, bis er einen zweiten Schnittpunkt P2 des Randes 31 der Ausstanzung 28 mit der Bewegungsbahn 30 erreicht. Während seiner Bewegung quer durch die Ausstanzung 28 wird der Laserstrahl 29 fortwährend von dem Reflektor 23 zu dem Empfänger der Sende- und Empfangseinheit 22 reflektiert. Der damit verbundene Lichteinfall an dem Empfänger der Sende- und Empfangseinheit 22 endet, sobald der Laserstrahl 29 den Rand 31 der Ausstanzung 28 in dem zweiten Schnittpunkt P2 erreicht. Das Ende des Lichteinfalls an der Sende- und Empfangseinheit 22 markiert für die numerische Steuerung der maschinellen Anordnung 1 einen Betriebszustand, zu welchem erneut die Position des Bleches 11 in dem x-y-z Koordinatensystem der maschinellen Anordnung 1 bestimmt wird. Aus der Positionsänderung des Bleches 11 zwischen der ersten Positionsbestimmung (Laserstrahl 29 in P1) und der zweiten Positionsbestimmung (Laserstrahl 29 in P2) ermittelt die Auswerteeinrichtung 25 die Ist-Erstreckung der Ausstanzung 28 zwischen dem ersten Schnittpunkt P1 und dem zweiten Schnittpunkt P2 und damit den Durchmesser der gemäß Figur 2 kreisförmigen Ausstanzung 28. Die ermittelte Ist-Erstreckung der Ausstanzung 28 wird in der Auswerteeinrichtung 25 mit einer in der numerischen Steuerung der maschinellen Anordnung 1 hinterlegten Soll-Erstreckung der Ausstanzung 28 verglichen. Diese Soll-Erstreckung wird definiert durch die Maße des für die Erstellung der Ausstanzung 28 einzusetzenden Stanzwerkzeuges 18.

Allein die Tatsache, dass bei der Detektionsbewegung zwischen Blech 11 und Laserstrahl 29 Licht von dem Sender der Sende- und Empfangseinheit 22 auf den Reflektor 23 und von dort zu dem Empfänger der Sende und Empfangseinheit 22 gelangt ist, belegt, dass bei der vorausgegangenen Bearbeitung an dem Blech 11 eine Werkstücköffnung erstellt worden ist. Einzelheiten der erstellten Werkstücköffnung können durch Auswertung der beschriebenen Detektionsbewegung gewonnen werden.

Wird bei dem vorgenommenen Vergleich eine relevante Abweichung der Ist-Erstreckung von der Soll-Erstreckung der Ausstanzung 28 festgestellt, so deutet dies auf irreguläre Verhältnisse bei der vorausgegangenen stanzenden Blechbearbeitung hin. Denkbar ist beispielsweise, dass bei der Stanzbearbeitung des Bleches 11 das falsche Stanzwerkzeug 18, etwa ein Stanzstempel 15 und eine Stanzmatrize 16 mit zu großem Durchmesser, eingesetzt worden ist. In Frage kommt außerdem ein teilweiser Stempelbruch an dem Stanzwerkzeug 18, aufgrund dessen die zu erstellende Ausstanzung 28 nur teilweise frei geschnitten werden konnte. Das Bearbeitungsergebnis bei teilweisem Stempelbruch ist in Figur 2 anhand einer entsprechend fehlerhaften Ausstanzung 28/1 dargestellt.

Unabhängig von der Ursache werden bei Feststellung einer relevanten Abweichung der Ist-Erstreckung der Ausstanzung 28 von der betreffenden Soll-Erstreckung über die Bewegungssteuerung 26 die Antriebsmotoren der Koordinatenführung 6 und über die Pressensteuerung 27 der Pressenantrieb der Presseinrichtung 13 stillgesetzt. Außerdem generiert die numerische Steuerung der maschinellen Anordnung 1 eine Fehlermeldung, durch welche der Bediener über die aufgetretene Störung informiert wird.

Als Alternative zu der Bewegungsbahn 30 ist in Figur 2 eine Bewegungsbahn 32 der Detektionsbewegung zwischen Laserstrahl 29 und Blech 11 skizziert. Dabei ist die Bewegungsbahn der besseren Erkennbarkeit wegen gegenüber dem Rand 31 der Ausstanzung versetzt dargestellt. Tatsächlich beschreibt die Bewegungsbahn 32 die Soll-Kontur des Randes 31 der Ausstanzung 28. Der Laserstrahl 29 fährt die Bewegungsbahn 32 bei der Detektionsbewegung mit seiner Strahlachse ab. Dementsprechend fällt ein Teil des Querschnittes des Laserstrahls 29 durch die Ausstanzung 28, der andere Teil des Laserstrahlquerschnittes fällt auf die Oberseite des Bleches 11. Die vorstehend beschriebene Sende- und Empfangseinheit 22 sowie der zugehörige Reflektor 23 sind ersetzt durch eine Sendeeinrichtung 33 oberhalb des Bleches 11 und eine Empfangseinrichtung 34 unterhalb des Bleches 11. Zu der Empfangseinrichtung 34 gelangt der durch die Ausstanzung 28 fallende Teil des Querschnittes des Laserstrahls 29. Sendeeinrichtung 33 und Empfangseinrichtung 34 bilden eine Detektionseinrichtung und stehen mit der Auswerteeinrichtung 25 des Steuerungsrechners 24 in Verbindung.

Bei der Detektionsbewegung wird mit dem Laserstrahl 29 die Bewegungsbahn 32 und damit die Soll-Kontur des Randes 31 der Ausstanzung 28 abgefahren. Trifft während der gesamten Detektionsbewegung der betreffende Teil des Querschnittes des Laserstrahls 29 auf die Empfangseinrichtung 34 auf, so ist dies ein Zeichen dafür, dass die Ist-Kontur des Randes 31 der Ausstanzung 28 mit der Soll-Kontur übereinstimmt. Gelangt der Laserstrahl 29 während der Detektionsbewegung mit einer oder mehreren Unterbrechungen auf die Empfangseinrichtung 34, so weist dies auf einen teilweisen Stempelbruch und somit auf das Vorliegen einer Ausstanzung nach Art der Ausstanzung 28/1 in Figur 2 hin. Fällt während der Detektionsbewegung entlang der Bewegungsbahn 32 überhaupt kein Licht an der Empfangseinrichtung 34 ein, so indiziert dies entweder einen zu kleinen Durchmesser der erstellten Ausstanzung oder einen vollständigen Stempelbruch, aufgrund dessen in dem an sich zu bearbeitenden Bereich des Bleches 11 keine Werkstücköffnung erstellt worden ist.

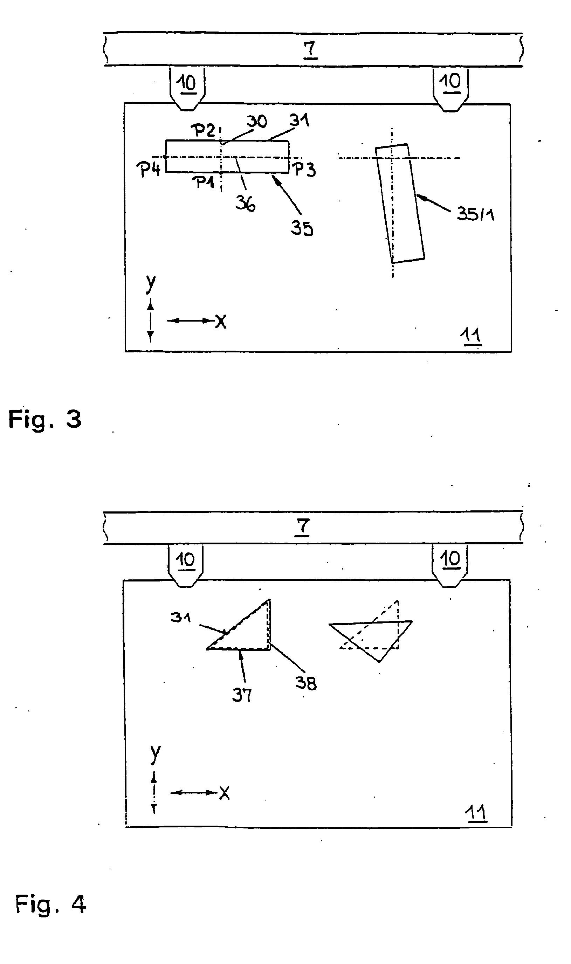

Im Falle von Ausstanzungen mit einem von der Kreisform abweichenden Querschnitt lässt sich zusätzlich überprüfen, ob die Ausstanzung an dem Blech 11 mit ihrer Soll-Orientierung angeordnet ist. Auch zu diesem Zweck kann die Bewegungsbahn der auszuführenden Detektionsbewegung entweder quer durch die betreffende Ausstanzung hindurch (Figur 3) oder an dem Rand der betreffenden Ausstanzung entlang (Figur 4) verlaufen.

In dem erstgenannten, in Figur 3 gezeigten Fall wird die Ist-Erstreckung einer Blechöffnung bzw. Ausstanzung 35 zwischen Schnittpunkten P1, P2 und/oder zwischen Schnittpunkten P3, P4 zwischen einem Rand 31 der Ausstanzung 35 und einer Bewegungsbahn 30 oder 36 mit einer entsprechenden Soll-Erstreckung verglichen. Wie sich anhand der fehlerhaften Ausstanzung 35/1 gemäß Figur 3 ohne weiteres nachvollziehen lässt, kann eine Abweichung der bestimmten Ist-Erstreckung der Ausstanzung 35 von der betreffenden Soll-Erstreckung auf eine Fehlausrichtung der Ausstanzung 35 an dem Blech 11 hindeuten. Grund für die Fehlausrichtung der Ausstanzung 35 kann eine Fehlausrichtung des Stanzwerkzeuges 18 sein.

Entsprechend ist anhand von Figur 4 nachvollziehbar, dass auch bei Abfahren der Soll-Kontur des Randes 31 einer Blechöffnung oder Ausstanzung 37 im Rahmen einer Detektionsbewegung entlang einer Bewegungsbahn 38 Rückschlüsse darauf möglich sind, ob die Ausstanzung 37 an dem Blech 11 korrekt oder fehlerhaft ausgerichtet ist.

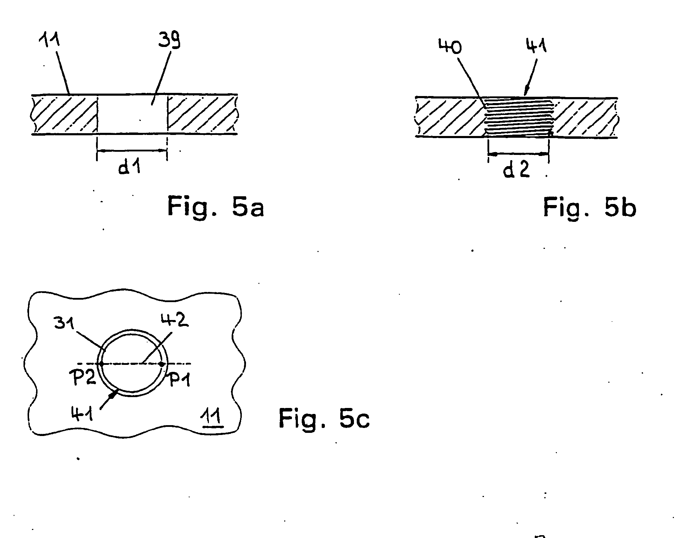

Die Figuren 5a, 5b, 5c betreffen den Fall, dass an der maschinellen Anordnung 1 zunächst mittels eines Stanzwerkzeuges 18 eine Blechöffnung in Form einer Ausstanzung 39 erstellt worden ist. Gemäß Figur 5a besitzt die in dem dargestellten Beispielsfall kreisförmige Ausstanzung 39 einen Durchmesser d1. Nach der stanzenden Bearbeitung des Bleches 11 wurde an der oberen Werkzeugaufnahme 14 sowie an der unteren Werkzeugaufnahme 17 anstelle des Stanzwerkzeuges 18 ein Gewindeformwerkzeug 19 eingewechselt. Mittels des Gewindeformwerkzeuges 19 wurde in die Wand der Ausstanzung 39 ein Gewinde 40 eingeformt. Ausweislich Figur 5b besitzt eine mit dem Gewinde 40 versehene Blech- bzw. Gewindeöffnung 41 einen Kerndurchmesser d2. Bearbeitungsbedingt ist d2 einige Zehntelmillimeter kleiner als d1. Die Ausstanzung 39 kann auch in einem völlig separaten Arbeitsgang, beispielsweise an einer von der maschinellen Anordnung 1 verschiedenen Bearbeitungseinrichtung erstellt worden sein.

Zur Überprüfung des Bearbeitungsergebnisses wird das Blech 11 mit dem Bereich der Gewindeöffnung 41 relativ zu dem von der Sende- und Empfangseinheit 22 der maschinellen Anordnung 1 ausgesandten Laserstrahl 29 bewegt. Eine Bewegungsbahn 42 der betreffenden Detektionsbewegung ist in Figur 5c strichpunktiert angedeutet. In der zu Figur 2 beschriebenen Weise wird die Ist-Erstreckung, d.h. der Ist-Durchmesser der Gewindeöffnung 41 zwischen den Schnittpunkten P1 und P2 ermittelt. Anschließend wird die ermittelte Ist-Erstreckung mit der entsprechenden Soll-Erstreckung verglichen. Ergibt dieser Vergleich, dass die Ist-Erstreckung der Gewindeöffnung 41 nicht das Sollmaß sondern vielmehr das Maß d1 besitzt, so deutet dies auf eine Störung des an sich auszuführenden Gewindeformvorganges hin. Grund für diese Störung kann ein schadhaftes Gewindeformwerkzeug 19 sein.

Auch in den Anwendungsfällen gemäß den Figuren 3, 4 und 5a, 5b, 5c wird bei Feststellung eines irregulären Bearbeitungsergebnisses in den mittels der maschinellen Anordnung 1 realisierten Fertigungsprozess eingegriffen. Die Antriebsmotoren der Koordinatenführung 6 sowie der Pressenantrieb der Presseinrichtung 13 werden stillgesetzt, eine Fehlermeldung für den Maschinenbediener wird generiert.

## Patentansprüche

1. Maschinelle Anordnung für die Blechfertigung,
• mit einem C-förmigen Maschinengestell (2), das einen oberen Gestellschenkel (3), einen unteren Gestellschenkel (4) sowie einen Rachenraum (5) aufweist,
• mit einer in dem Rachenraum (5) des Maschinengestells (2) untergebrachten und an einen Steuerungsrechner (24) einer numerischen Steuerung der maschinellen Anordnung angeschlossenen Koordinatenführung (6) mit einem Schlitten (7), der mit Spannpratzen (10) versehen ist, welche einen Rand eines Bleches (11) klemmen, das seinerseits auf einer Blechauflage (12) gelagert ist sowie
• mit einer Bearbeitungseinrichtung in Form eines von einem Stanzstempel (15) und einer Stanzmatrize (16) gebildeten Stanzwerkzeuges (18), welches an Blechen (11) Werkstücköffnungen (28, 35, 37, 41) erstellt, wobei der Stanzstempel (15) in eine obere Werkzeugaufnahme (14) einer Presseinrichtung (13) eingewechselt ist, die an dem oberen Gestellschenkel (3) des Maschinengestells (2) angebracht ist und die ein bei einer Hubbewegung der oberen Werkzeugaufnahme (14) stationäres Gehäuse (21) aufweist und wobei die Stanzmatrize (16) in einer unteren Werkzeugaufnahme (17) an dem unteren Gestellschenkel (4) des Maschinengestells (2) vorgesehen ist, und
• mit einer Vorrichtung zur Überprüfung der Beschaffenheit des in Form einer Werkstücköffnung (28, 35, 37, 41) vorliegenden Ergebnisses einer Blechbearbeitung,
**dadurch gekennzeichnet, dass** die Vorrichtung zur Überprüfung der Beschaffenheit des in Form einer Werkstücköffnung (28, 35, 37, 41) vorliegenden Ergebnisses einer Blechbearbeitung
• eine Detektionseinrichtung (22, 23; 33, 34) aufweist, die gebildet ist von einer an der von der Koordinatenführung (6) abliegenden Seite des Gehäuses (21) vorgesehenen Sende- und Empfangseinheit (22) und von einem der Sende- und Empfangseinheit (22) gegenüberliegend an dem unteren Gestellschenkel (4) angebrachten Reflektor (23) oder die gebildet ist durch eine anstelle der Sende- und Empfangseinheit (22) vorgesehene Sendeeinrichtung (33) und eine anstelle des Reflektors (23) vorgesehene Empfangseinrichtung (34) wobei ein Sender der Sende- und Empfangseinheit (22) oder die Sendeeinrichtung (23) einen Detektionsstrahl (29) zu dem bearbeiteten Blech (11) hin richtet und wobei die Sende- und Empfangseinheit (22) oder die Sendeeinrichtung (33) und die Empfangseinrichtung (34) ebenso wie die Koordinatenführung (6) an den Steuerungsrechner (24) der numerischen Steuerung der maschinellen Anordnung angeschlossen sind,
• als Bewegungseinheit die Koordinatenführung (6) aufweist, welche den Detektionsstrahl (29) der Detektionseinrichtung (22, 23; 33, 34) und das bearbeitete Blech (11) mit einer Detektionsbewegung in Strahlquerrichtung des Detektionsstrahles (29) relativ zueinander bewegt,
wobei die Detektionseinrichtung (22, 23; 33, 34) bei der Detektionsbewegung den Rand (31) der Werkstücköffnung (28, 35, 37, 41) mittels des Detektionsstrahls (29) detektiert und wobei eine Auswerteeinrichtung (25) des Steuerungsrechners (24) der numerischen Steuerung der maschinellen Anordnung anhand des Detektionsergebnisses einen geometrischen Ist-Zustand der Werkstücköffnung (28, 35, 37, 41) bestimmt und mit einem entsprechenden Soll-Zustand vergleicht.

2. Maschinelle Anordnung nach Anspruch 1, **dadurch gekennzeichnet, dass** der Sender der Sende- und Empfangseinheit (22) oder die Sendeeinrichtung (23) als Detektionsstrahl (29) einen Lichtstrahl zu dem bearbeiteten Blech (11) hin richtet.

3. Maschinelle Anordnung nach einem der vorhergehenden Ansprüche, **dadurch gekennzeichnet,**
• **dass** die Koordinatenführung (6) den Detektionsstrahl (29) und das bearbeitete Blech (11) relativ zueinander mit einer Detektionsbewegung bewegt, deren Bewegungsbahn (30, 36, 42) quer durch die Werkstücköffnung (28, 35, 41) verläuft,
• **dass** die Detektionseinrichtung (22, 23; 33, 34) bei der Detektionsbewegung den Rand (31) der Werkstücköffnung (28, 35, 41) mittels des Detektionsstrahls (29) im Umfang der einander entlang der Bewegungsbahn (30, 36, 42) der Detektionsbewegung gegenüberliegenden Schnittpunkte (P1, P2; P3, P4) des Randes (31) der Werkstücköffnung (28, 35, 41) mit der Bewegungsbahn (30, 36, 42) der Detektionsbewegung detektiert und
• **dass** die Auswerteeinrichtung (25) des Steuerungsrechners (24) der numerischen Steuerung der maschinellen Anordnung anhand des Detektionsergebnisses als geometrischen Ist-Zustand der Werkstücköffnung (28, 35, 41) deren Ist-Erstreckung zwischen den detektierten Schnittpunkten (P1, P2; P3, P4) des Randes (31) der Werkstücköffnung (28, 35, 41) und der Bewegungsbahn (30, 36, 42) der Detektionsbewegung bestimmt und mit einem entsprechenden Soll-Zustand in Form einer entsprechenden Soll-Erstreckung vergleicht.

4. Maschinelle Anordnung nach Anspruch 3, **dadurch gekennzeichnet, dass** als Ergebnis einer Blechbearbeitung eine kreisförmige Werkstücköffnung (28, 41) vorliegt und dass die Auswerteeinrichtung (25) des Steuerungsrechners (24) der numerischen Steuerung der maschinellen Anordnung anhand des Detektionsergebnisses als geometrischen Ist-Zustand der kreisförmigen Werkstücköffnung (28, 41) deren Ist-Durchmesser zwischen den detektierten Schnittpunkten (P1, P2) des Randes (31) der kreisförmigen Werkstücköffnung (28, 41) und der Bewegungsbahn (30, 42) der Detektionsbewegung bestimmt und mit einem entsprechenden Soll-Zustand in Form eines entsprechenden Soll-Durchmessers vergleicht.

5. Maschinelle Anordnung nach einem der vorhergehenden Ansprüche, **dadurch gekennzeichnet,**
• **dass** die Koordinatenführung (6) den Detektionsstrahl (29) und das bearbeitete Blech (11) relativ zueinander mit einer Detektionsbewegung bewegt, deren Bewegungsbahn (32, 38) entlang des Randes (31) der Werkstücköffnung (28, 37) verläuft,
• **dass** die Detektionseinrichtung (22, 23; 33, 34) bei der Detektionsbewegung den Rand (31) der Werkstücköffnung (28, 37) mittels des Detektionsstrahls (29) über wenigstens eine in Umfangsrichtung der Werkstücköffnung (28, 37) verlaufende Teillänge detektiert und
• **dass** die Auswerteeinrichtung (25) des Steuerungsrechners (24) der numerischen Steuerung der maschinellen Anordnung anhand des Detektionsergebnisses als geometrischen Ist-Zustand der Werkstücköffnung (28, 37) einen Ist-Zustand wenigstens eines Teiles der Randkontur der Werkstücköffnung (28, 37) bestimmt und mit einem entsprechenden Soll-Zustand vergleicht.

6. Maschinelle Anordnung nach Anspruch 5, **dadurch gekennzeichnet, dass** die Auswerteeinrichtung (25) des Steuerungsrechners (24) der numerischen Steuerung der maschinellen Anordnung als geometrischen Ist-Zustand wenigstens eines Teiles der Randkontur der Werkstücköffnung (28, 37) die Ist-Form und/oder die Ist-Ausrichtung des wenigstens einen Teiles der Randkontur bestimmt und mit einer entsprechenden Soll-Form und/oder mit einer entsprechenden Soll-Ausrichtung vergleicht.

7. Maschinelle Anordnung nach einem der vorhergehenden Ansprüche, **dadurch gekennzeichnet, dass** anstelle des Stanzwerkzeuges (18) ein Gewindeformwerkzeug (19) als Bearbeitungseinrichtung vorgesehen und mit seinen Werkzeugteilen in die obere Werkzeugaufnahme (14) und die untere Werkzeug-aufnahme (17) einbaubar ist und dass das Stanzwerkzeug (18) mit dem Gewindeformwerkzeug (19) als Ergebnis einer Blechbearbeitung an Blechen (11) Werkstücköffnungen (41) erstellt, indem das Stanzwerkzeug (18) eine Ausstanzung (39) erstellt und das Gewindeformwerkzeug (19) in die Wand der Ausstanzung (39) ein Gewinde (40) einformt.

8. Maschinelle Anordnung nach einem der vorhergehenden Ansprüche, **dadurch gekennzeichnet, dass** die Auswerteeinrichtung (25) des Steuerungsrechners (24) der numerischen Steuerung der maschinellen Anordnung mit einer Steuerungseinrichtung (27) der Bearbeitungseinrichtung in Verbindung steht und dass die Bearbeitungseinrichtung über die Steuerungseinrichtung (27) in Abhängigkeit von dem Ergebnis des mittels der Auswerteeinrichtung (25) durchgeführten Ist-/Soll-Zustandsvergleichs ansteuerbar ist.

## Claims

1. Mechanical arrangement for metal sheet manufacturing,
• having a C-shaped machine frame (2) which has an upper frame member (3), a lower frame member (4) and a jaw space (5),
• having a coordinate guide (6) which is accommodated in the jaw space (5) of the machine frame (2) and which is connected to a control processor (24) of a numerical control of the mechanical arrangement and which has a sliding member (7) which is provided with clamping claws (10) which clamp an edge of a metal sheet (11) which itself is supported on a metal sheet support (12) and
• having a processing device in the form of a punching tool (18) which is formed by a punching stamp (15) and a punching die (16) and which produces workpiece openings (28, 35, 37, 41) in metal sheets (11), the punching stamp (15) being introduced into an upper tool receiving member (14) of a pressing device (13) which is fitted to the upper frame member (3) of the machine frame (2) and which has a housing (21) which is stationary during a travel movement of the upper tool receiving member (14) and the punching die (16) being provided in a lower tool receiving member (17) on the lower frame member (4) of the machine frame (2), and
• having a device for checking the quality of the result of a metal sheet processing operation which is present in the form of a workpiece opening (28, 35, 37, 41),
**characterised in that** the device for checking the quality of the result of a metal sheet processing operation which is present in the form of a workpiece opening (28, 35, 37, 41)
• has a detection device (22, 23; 33, 34) which is formed by a transmission and receiving unit (22) which is provided at the side of the housing (21) which is remote from the coordinate guide (6) and by a reflector (23) which is fitted to the lower frame member (4) in a position opposite the transmission and receiving unit (22), or which is formed by a transmission device (33) which is provided in place of the transmission and receiving unit (22) and a receiving device (34) which is provided in place of the reflector (23), a transmitter of the transmission and receiving unit (22) or the transmission device (23) directing a detection beam (29) towards the processed metal sheet (11), and the transmission and receiving unit (22) or the transmission device (33) and the receiving device (34) and the coordinate guide (6) being connected to the control processor (24) of the numerical control of the mechanical arrangement,
• has as a movement unit the coordinate guide (6) which moves the detection beam (29) of the detection device (22, 23; 33, 34) and the processed metal sheet (11) relative to each other with a detection movement in the transverse beam direction of the detection beam (29),
the detection device (22, 23; 33, 34) detecting the edge (31) of the workpiece opening (28, 35, 37, 41) by means of the detection beam (29) during the detection movement and an evaluation device (25) of the control processor (24) of the numerical control of the mechanical arrangement determining an actual geometric state of the workpiece opening (28, 35, 37, 41) by means of the detection result and comparing it with a corresponding desired state.

2. Mechanical arrangement according to claim 1, **characterised in that** the transmitter of the transmission and receiving unit (22) or the transmission device (23) directs as a detection beam (29) a light beam towards the processed metal sheet (11).

3. Mechanical arrangement according to either of the preceding claims, **characterised in that**
• the coordinate guide (6) moves the detection beam (29) and the processed metal sheet (11) relative to each other with a detection movement whose movement path (30, 36, 42) extends transversely through the workpiece opening (28, 35, 41),
• **in that** the detection device (22, 23; 33, 34) during the detection movement detects the edge (31) of the workpiece opening (28, 35, 51) by means of the detection beam (29) within the scope of the intersections (P1, P2; P3, P4) of the edge (31) of the workpiece opening (28, 35, 41) with the movement path (30, 36, 42) of the detection movement, which intersections face each other along the movement path (30, 36, 42) of the detection movement, and
• **in that** the evaluation device (25) of the control processor (24) of the numerical control of the mechanical arrangement, using the detection result, determines as a geometric actual state of the workpiece opening (28, 35, 41) the actual extent thereof between the detected intersections (P1, P2; P3, P4) of the edge (31) of the workpiece opening (28, 35, 41) and the movement path (30, 36, 42) of the detection movement and compares it with a corresponding desired state in the form of a corresponding desired extent.

4. Mechanical arrangement according to claim 3, **characterised in that**, as a result of a metal sheet processing operation, a circular workpiece opening (28, 41) is present and **in that** the evaluation device (25) of the control processor (24) of the numerical control of the mechanical arrangement determines as a geometric actual state of the circular workpiece opening (28, 41) the actual diameter thereof between the detected intersections (21, P2) of the edge (31) of the circular workpiece opening (28, 41) and the movement path (30, 42) of the detection movement on the basis of the detection result and compares it with a corresponding desired state in the form of a corresponding desired diameter.

5. Mechanical arrangement according to any one of the preceding claims, **characterised in that**
• the coordinate guide (6) moves the detection beam (29) and the processed metal sheet (11) relative to each other with a detection movement whose movement path (32, 38) extends along the edge (31) of the workpiece opening (28, 37),
• **in that** the detection device (22, 23; 33, 34) during the detection movement detects the edge (31) of the workpiece opening (28, 37) by means of the detection beam (29) over at least a partial length which extends in a peripheral direction of the workpiece opening (28, 37) and
• **in that** the evaluation device (25) of the control processor (24) of the numerical control of the mechanical arrangement on the basis of the detection result as a geometric actual state of the workpiece opening (28, 37) determines an actual state of at least a portion of the edge contour of the workpiece opening (28, 37) and compares it with a corresponding actual state.

6. Mechanical arrangement according to claim 5, **characterised in that** the evaluation device (25) of the control processor (24) of the numerical control of the mechanical arrangement as a geometric actual state of at least one portion of the edge contour of the workpiece opening (28, 37) determines the actual form and/or the actual orientation of the at least one portion of the edge contour and compares it with a corresponding desired form and/or with a corresponding desired orientation.

7. Mechanical arrangement according to any one of the preceding claims, **characterised in that**, in place of the punching tool (18), a thread forming tool (19) is provided as a processing device and can be installed with the tool components thereof in the upper tool receiving member (14) and the lower tool receiving member (17) and **in that** the punching tool (18) with the thread forming tool (19) produces workpiece openings (41) as a result of a metal sheet processing operation in metal sheets (11) by the punching tool (18) producing a punched-out portion (39) and the thread forming tool (19) forming a thread (40) in the wall of the punched-out portion (39).

8. Mechanical arrangement according to any one of the preceding claims, **characterised in that** the evaluation device (25) of the control processor (24) of the numerical control of the mechanical arrangement is connected to a control device (27) of the processing device and **in that** the processing device can be controlled by means of the control device (27) in accordance with the result of the actual/desired state comparison carried out by means of the evaluation device (25).

## Revendications

1. Système mécanique pour la fabrication de tôles,
- avec un bâti de machine (2) en forme de C, qui présente une branche supérieure de bâti (3), une branche inférieure de bâti (4) et une cavité du genre pharynx (5),
- avec un guidage par coordonnées (6), qui est logé dans la cavité du genre pharynx (5) du bâti de machine (2), est raccordé à un calculateur de commande (24) d'une commande numérique du système mécanique et présente un chariot (7) doté de pattes de serrage (10) qui serrent un bord d'une tôle (11) qui est elle-même supportée par un support de tôle (12),
- avec un équipement d'usinage sous la forme d'un outil de découpage (18), qui est formé d'un poinçon de découpage (15) et d'une matrice de découpage (16) et qui réalise des ouvertures de pièces (28, 35, 37, 41) sur des tôles (11), sachant que le poinçon de découpage (15) est monté de manière interchangeable dans un porte-outil supérieur (14) d'un ensemble de presse (13) qui est installé sur la branche supérieure de bâti (3) du bâti de machine (2) et qui présente un carter (21) stationnaire lors d'un mouvement de course du porte-outil supérieur (14), et sachant que la matrice de découpage (16) est prévue dans un porte-outil inférieur (17) sur la branche inférieure de bâti (4) du bâti de machine (2),
- et avec un dispositif pour contrôler l'état du résultat d'un usinage de tôle, résultat qui est présent sous la forme d'une ouverture de pièce (28, 35, 37, 41),
**caractérisé en ce que** le dispositif pour contrôler l'état du résultat d'un usinage de tôle présent sous la forme d'une ouverture de pièce (28, 35, 37, 41)
- présente un équipement de détection (22, 23 ; 33, 34), qui est formé par une unité émettrice et réceptrice (22) prévue sur le côté du carter (21) éloigné du guidage par coordonnées (6) et par un réflecteur (23) installé sur la branche inférieure de bâti (4) en vis-à-vis de l'unité émettrice et réceptrice (22), ou qui est forme par un équipement émetteur (33) prévu à la place de l'unité émettrice et réceptrice (22) et par un équipement récepteur (34) prévu à la place du réflecteur (23), sachant qu'un émetteur de l'unité émettrice et réceptrice (22) ou l'équipement émetteur (33) dirige un faisceau de détection (29) vers la tôle usinée (11), et sachant que l'unité émettrice et réceptrice (22) ou l'équipement émetteur (33) et l'équipement récepteur (34) de même que le guidage par coordonnées (6) sont raccordés au calculateur de commande (24) de la commande numérique du système mécanique,
- présente comme unité de déplacement le guidage par coordonnées (6) qui, par un mouvement de détection, déplace l'un par rapport à l'autre le faisceau de détection (29) de l'équipement de détection (22, 23 ; 33, 34) et la tôle usinée (11) dans la direction transversale du faisceau de détection (29),
sachant que l'équipement de détection (22, 23 ; 33, 34) détecte lors du mouvement de détection le bord (31) de l'ouverture de pièce (28, 35, 37, 41) au moyen du faisceau de détection (29), et sachant qu'un équipement d'évaluation (25) du calculateur de commande (24) de la commande numérique du système mécanique déterminé à l'aide du résultat de détection un état géométrique réel de l'ouverture de pièce (28, 35, 37, 41) et le compare à un état de consigne correspondant.

2. Système mécanique selon la revendication 1, **caractérisé en ce que** l'émetteur de l'unité émettrice et réceptrice (22) ou l'équipement émetteur (33) dirige comme faisceau de détection (29) un faisceau lumineux vers la tôle usinée (11).

3. Système mécanique selon l'une des revendications précédentes, **caractérisé**
- **en ce que** le guidage par coordonnées (6) déplace l'un par rapport à l'autre le faisceau de détection (29) et la tôle usinée (11) par un mouvement de détection dont la trajectoire de déplacement (30, 36, 42) s'étend transversalement à travers l'ouverture de pièce (28, 35, 41),
- **en ce que** l'équipement de détection (22, 23 ; 33, 34), lors du mouvement de détection, détecte au moyen du faisceau de détection (29) du bord (31) de l'ouverture de pièce (28, 35, 41) les points d'intersection (P1, P2 ; P3, P4), mutuellement opposés le long de la trajectoire de déplacement (30, 36, 42) du mouvement de détection, du bord (31) de l'ouverture de pièce (28, 35, 41) avec la trajectoire de déplacement (30, 36, 42) du mouvement de détection,
- et **en ce que** l'équipement d'évaluation (25) du calculateur de commande (24) de la commande numérique du système mécanique détermine à l'aide du résultat de détection, comme état géométrique réel de l'ouverture de pièce (28, 35, 41), son étendue réelle entre les points d'intersection détectés (P1, P2 ; P3, P4) du bord (31) de l'ouverture de pièce (28, 35, 41) et de la trajectoire de déplacement (30, 36, 42) du mouvement de détection, et la compare à un état de consigne correspondant sous la forme d'une étendue de consigne correspondante.

4. Système mécanique selon la revendication 3, **caractérisé en ce qu'**une ouverture de pièce circulaire (28, 41) est présente comme résultat d'un usinage de tôle, et **en ce que** l'équipement d'évaluation (25) du calculateur de commande (24) de la commande numérique du système mécanique détermine à l'aide du résultat de détection, comme état géométrique réel de l'ouverture de pièce circulaire (28, 41), son diamètre réel entre les points d'intersection détectés (P1, P2) du bord (31) de l'ouverture de pièce circulaire (28, 41) et de la trajectoire de déplacement (30, 42) du mouvement de détection, et le compare à un état de consigne correspondant sous la forme d'un diamètre de consigne correspondant.

5. Système mécanique selon l'une des revendications précédentes, **caractérisé**
- **en ce que** le guidage par coordonnées (6) déplace l'un par rapport à l'autre le faisceau de détection (29) et la tôle usinée (11) par un mouvement de détection dont la trajectoire de déplacement (32, 38) s'étend le long du bord (31) de l'ouverture de pièce (28, 37),
- **en ce que** l'équipement de détection (22, 23 ; 33, 34), lors du mouvement de détection, détecte le bord (31) de l'ouverture de pièce (28, 37) au moyen du faisceau de détection (29) sur au moins une longueur partielle s'étendant dans la direction périphérique de l'ouverture de pièce (28, 37),
- et **en ce que** l'équipement d'évaluation (25) du calculateur de commande (24) de la commande numérique du système mécanique détermine à l'aide du résultat de détection, comme état géométrique réel de l'ouverture de pièce (28, 37), un état réel d'au moins une partie du contour de bord de l'ouverture de pièce (28, 37), et le compare à un état de consigne correspondant.

6. Système mécanique selon la revendication 5, **caractérisé en ce que** l'équipement d'évaluation (25) du calculateur de commande (24) de la commande numérique du système mécanique détermine comme état géométrique réel d'au moins une partie du contour de bord de l'ouverture de pièce (28, 37) la forme réelle et/ou l'orientation réelle de ladite partie au moins unique du contour de bord, et la compare à une forme de consigne correspondante et/ou à une orientation de consigne correspondante.

7. Système mécanique selon l'une des revendications précédentes, **caractérisé en ce qu'**un outil (19) de formation de filetage est prévu comme équipement d'usinage au lieu de l'outil de découpage (18) et peut être installé par ses parties d'outil dans le porte-outil supérieur (14) et dans le porte-outil inférieur (17), et **en ce que** l'outil de découpage (18) réalise avec l'outil (19) de formation de filetage, comme résultat d'un usinage de tôles, des ouvertures de pièces (41) sur des tôles (11), par le fait que l'outil de découpage (18) réalise une découpure (39) et que l'outil (19) de formation de filetage forme un filetage dans la paroi de la découpure (39).

8. Système mécanique selon l'une des revendications précédentes, **caractérisé en ce que** l'équipement d'évaluation (25) du calculateur de commande (24) de la commande numérique du système mécanique est relié à un équipement de commande (27) de l'équipement d'usinage, et **en ce que** l'équipement d'usinage peut être commandé au moyen de l'équipement de commande (27) en fonction du résultat de la comparaison réel/consigne effectuée au moyen de l'équipement d'évaluation (25).
